# EUROPEAN PATENT SPECIFICATION

(11) **EP 3 089 575 B1**
(45) Date of publication and mention of the grant of the patent: **27.03.2019**
(21) Application number: 14877001.9
(22) Date of filing: 18.12.2014
(51) Int. Cl.: A01B 63/111

(54) **A DEPTH CONTROLLING BELT ARRANGEMENT FOR A SOIL WORKING IMPLEMENT**
TIEFENKONTROLLBANDANORDNUNG FÜR EINE BODENBEARBEITUNGSVORRICHTUNG
AGENCEMENT DE COURROIE DE RÉGULATION DE LA PROFONDEUR POUR OUTIL DE TRAVAIL DU SOL

(30) Priority: 30.12.2013 NO 20131747
(43) Date of publication of application: 09.11.2016
(73) Proprietor: Kverneland Group Operations Norway AS, 4355 Kvernaland (NO)
(72) Inventor: TIME, Eyvind, N-4346 Bryne (NO)
(74) Representative: Håmsø Patentbyrå AS
(86) International application number: PCT/NO2014/050244
(87) International publication number: WO 2015/102497

(56) References cited:
- GB-A- 191 501 581
- US-A- 4 592 429
- US-A- 5 603 381
- US-A1- 2012 240 836
- US-A1- 2012 240 836

## Description

The present invention relates to a depth controlling arrangement for a reversible plough, mounted to a rear portion of a frame of the reversible plough and comprising a depth controller, and wherein the depth controlling arrangement comprises an, in operational state, endless belt forming a contact face against a ground. The invention further relates to the use of a belt arranged on a belt frame as depth controlling arrangement for a reversible plough.

The working depth for a plough is traditionally controlled by a combination of a height adjustable depth wheel in the rear end of the plough as well as hydraulic depth control in lift arms, which connects the plough to a tractor that pulls the plough. On soil with a low bearing capacity, it may be useful to use an extra big depth wheel, possibly a wheel assembly having two depth wheels mounted at a distance from each other. On a reversible plough, a wheel arm carrying the depth wheel will alternately be on the left and right side of the depth wheel.

The disadvantage of the depth wheel(s) as described above is that when ploughing an edge portion, which delimits the field which is ploughed, the depth wheel arrangement may hinder the ploughing of the far edges of the field, because the outwardly protruding wheel arrangement may come in conflict with a fence or a hedge which encircles the field. Therefore, there is a need for a depth control arrangement which replaces depth wheel and which builds less in the width of the plough, without reducing the load-carrying capacity. There is also a need for a depth control arrangement, which is more robust with regards to puncturing, which is a well-known problem with depth wheels when ploughing in stubble after growing maize.

GB 191501581 A describes a driving belt arrangement for an automotive soil working implement, typically of the kind where a plough is arranged at each end of a central drive unit, and where the implement alternately works the soil with the one or the other plough, as the one plough is right-turning and the other plough is left-turning. The driving belt arrangement comprises a belt arranged on each side of the drive unit, and they are connected to a driving gear comprising a motor. The working depth of the ploughs is regulated by means of a bar connecting the ploughs to a frame which extends horizontally out from the central drive unit, possibly also by means of a support wheel mounted in the rear ends of the ploughs.

WO 9424842 A1 describes a hydraulically operated depth wheel arrangement for a trailed plough where two parallel depth wheels are arranged coaxially at a distance from each other on a frame, which can be displaced vertically in order to contribute to depth controlling of the plough during working, and to act as transport wheels during moving of the plough when it is in raised transport position.
US 4592429 A describes a reversible plough with a front-mounted, single axle turning wheel assembly, wherein the turning function is connected to a rear mounted depth wheel in a master/slave-system, as the rear mounted depth wheel is suspended from the plough such that it is revolving around a vertical axis.
US2012240836 discloses a tillage coulter unit adapted for use with a farm implement. The coulter unit includes an upright, rotatable coulter blade with a gauge assembly operable to limit the depth of the coulter blade into soil and to minimize soil disruption. In one embodiment the gauge assembly includes a pair of elongated, shiftable belt or chain loops positioned in straddling relationship and astride the blade. The loops present lower runs which substantially contact the soil as the unit traverses a field. The coulter unit is pivotally secured to a main frame beam by means of a cross shaft extending transversely to the working direction of the implement and a cylinder assembly extending from the main frame beam to a rear portion of the plates connecting a gauge assembly and the main frame.
The invention has for its object to remedy or reduce at least one of the drawbacks of the prior art, or at least provide a useful alternative to prior art.

The object is achieved with a reversible plough according to claim 1 and the use according to claim 6. Further preferred embodiments of the invention are defined in the dependent claims. A belt arrangement is provided as a rear depth controlling arrangement for a plough, wherein an endless belt preferably made of a flexible material, for example reinforced rubber, has a contact face against the ground with a certain length which is considerably larger than the width of the belt, typically with a width/length ratio in the range of 1:4 to 1:8. Thereby it is achieved that the support surface of the depth controlling arrangement may be adapted to the actual design conditions by means of simply adjusting the contact face of the length of the belt without influencing on the width of the arrangement. At the same time the overall height of the depth controlling arrangement is limited separately from the desired size of the contact face.
The belt arrangement may preferably be adjusted in order to adapt the contact face to the prevailing working conditions by changing the distance between lower support rollers. For a belt with a given length this change is compensated by moving one or more upper support rollers in order to maintain the tension in the belt. Alternatively, a belt with a different length may be inserted.
In a first aspect, the invention more specifically concerns a reversible plough comprising
a depth controlling arrangement mounted to a rear portion of a frame of the reversible plough, and
a depth controller, wherein
the depth controlling arrangement comprises an, in operational state, endless belt forming a contact face against a ground, and wherein a belt frame is rotatable around a rotation axis substantially congruent with the working direction of the implement.

The belt frame may comprise at least three support rollers arranged to direct the belt in a linear movement in the contact of the belt against the ground.

The belt frame may be connected to the frame of the reversible plough by means of a support arm, which is pivotal around a first rotation axis arranged transversally to the working direction of the reversible plough.

The belt frame may be fastened to a support arm by means of a belt frame bearing, which forms a second rotation axis arranged transversally to the working direction of the reversible plough.

Between the belt frame bearing and the belt frame at least one rotation restraining friction element may be arranged.

In a second aspect, the invention more specifically concerns use of a belt arranged on a belt frame as depth controlling arrangement for a soil working implement.

In the following is described an example of a preferred embodiment illustrated in the accompanying drawings, wherein:
- Fig. 1: shows in perspective, a soil working implement provided with a depth controlling arrangement according to the invention; and
- Fig. 2: shows in a larger scale a section of a rear portion of the soil working implement with the depth controlling arrangement according to the invention.

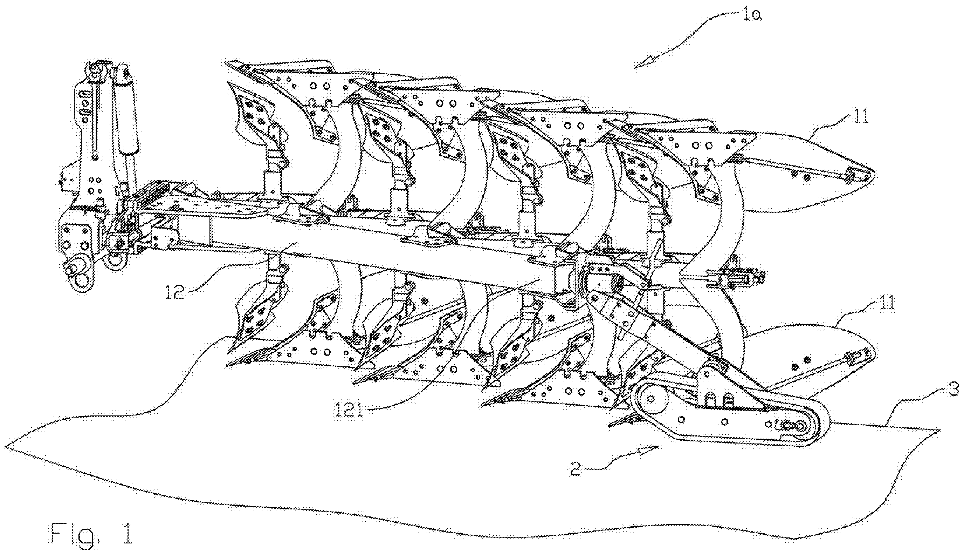

In the drawings the reference numeral 1 denotes a soil working implement, here shown as a reversible plough. In the following description, the term "plough" is used for the soil working implement. The plough 1 comprises multiple working organs 11 in the form of plough bodies arranged on a frame 12. In a rear portion 121 of the frame 12 a depth controlling arrangement 2 is placed, arranged to be able to make sure that the plough 1 in its operational state keeps a constant working depth in a ground 3 (see Figure 1).

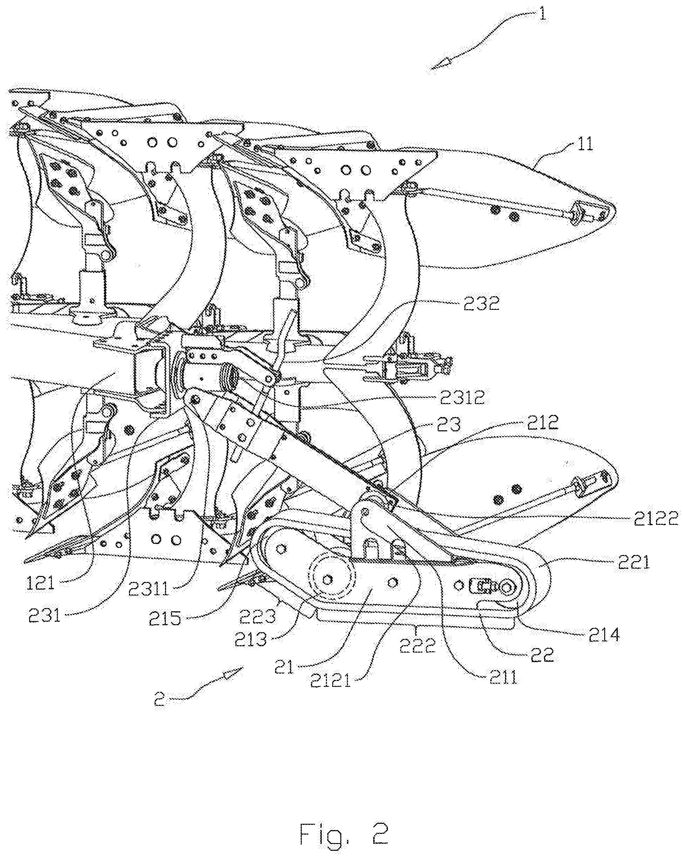

Referring to Figure 2, the depth controlling arrangement 2 is provided with a belt frame 21 which via a bearing pedestal 211 and a belt frame bearing 212 is attached to a support arm 23 pivotal about a horizontal rotation axis 2121 arranged transversally relative to the working direction of the plough 1. The belt frame 21 is provided with a front support roller 213, a rear turning roller 214 and a front turning roller 215, which form guiding elements for a belt 22 formed from a suitable material, typically reinforced rubber. The belt 22 is on a support surface 221 preferably provided with not shown ribs, knobs or the similar arranged to increase the friction between the belt 22 and the ground 3 and thereby preventing the belt 22 from sliding on the ground 3. One of the rollers 213, 214, 215, preferably the rear turning roller 214, is formed as a tensioning roller as it is displaceably connected to the belt frame 21. A contact face 222 against the ground 3 is formed from a belt portion, which runs between the front support roller 213 and the rear turning roller 214.

In order to stabilize the belt frame 21 in a normal working position with the contact face 222 substantially parallel to the ground when the plough 1 is lifted from the ground 3, the belt bearing frame 212 is provided with at least one friction element 2122 which restrains the pivotal movement of the belt frame 21 around its transversal rotation axis 2121.

The support arm 23 is connected to a frame connection 231 pivotal around a horizontal axis 2311 transversally placed with regards to the working direction of the plough 1. A depth controller 232, here shown as a crank, forms a second connection between a rear portion of the frame connection 231 and the support arm 23. When the depth controlling arrangement 2 is used on a reversible plough, as shown here, said transversally placed rotation axis 2311 is arranged to be pivotal around a rotation axis substantially congruent with the working direction of the plough 1 in order to attend to the need for readjustment of the depth controlling arrangement 2 when the plough 1 is turned. The frame connection 231 is connected to a rear frame portion 121 of the plough 1.

The vertical and horizontal distance between the front support roller 213 and the front turning roller 215 provides a front tilted path of motion 223, which makes sure the belt 22 passes over uneven parts of the ground 3.

## Claims

1. A reversible plough (1) comprising
a depth controlling arrangement (2) mounted to a rear portion (121) of a frame (12) of the reversible plough (1), and
a depth controller (232), wherein
the depth controlling arrangement (2) comprises an endless belt (22) forming, in operational state, a contact face (222) against a ground (3), wherein
a belt frame (21) is pivotal around a rotation axis (2312) substantially congruent with the working direction of the reversible plough (1).

2. The reversible plough (1) according to claim 1, wherein the belt frame (21) comprises at least three support rollers (213, 214, 215) arranged to guide the belt (22) in a linear movement when the belt (22) is in contact with the ground (3).

3. The reversible plough (1) according to claim 1, wherein the belt frame (21) is connected to the frame (11) of the reversible plough (1) by means of a support arm (23) which is pivotal around a first rotation axis (2311) arranged transversally to the working direction of the reversible plough (1).

4. The reversible plough (1) according to claim 1, wherein the belt frame (21) is mounted to a support arm (23) by means of a belt frame bearing (212) which forms a second rotation axis (2121) arranged transversally to the working direction of the reversible plough (1).

5. The reversible plough (1) according to claim 4, wherein at least one rotation restraining friction element (2122) is arranged between the belt frame bearing (212) and the belt frame (21).

6. Use of a belt arranged on a belt frame (21) as depth controlling arrangement (2) for a reversible plough (1) according to claim 1.

## Patentansprüche

1. Drehpflug (1) umfassend:
eine Tiefensteuerungsanordnung (2), welche an einem hinteren Abschnitt (121) eines Rahmens (12) des Drehpflugs (1) angebracht ist, und
einen Tiefenregler (232), wobei
die Tiefensteuerungsanordnung (2) ein Endlosband (22) umfasst, welches im Betriebszustand eine Kontaktfläche (222) gegen einen Boden (3) bildet, wobei ein Bandrahmen (21) um eine Rotationsachse (2312), welche im Wesentlichen kongruent mit der Arbeitsrichtung des Drehpfluges (1) ist, schwenkbar ist.

2. Drehpflug (1) gemäss Anspruch 1, wobei der Bandrahmen (21) mindestens drei Stützrollen (213, 214, 215) umfasst, welche angeordnet sind, um das Band (22) in einer Linearbewegung zu führen, wenn das Band (22) in Kontakt mit dem Boden (3) ist.

3. Drehpflug (1) gemäss Anspruch 1, wobei der Bandrahmen (21) über einen Stützarm (23), welcher um eine quer zur Arbeitsrichtung des Drehpfluges (1) angeordnete erste Rotationsachse (2311) schwenkbar ist, mit dem Drehpflug (1) verbunden ist.

4. Drehpflug (1) gemäss Anspruch 1, wobei der Bandrahmen (21) über ein Bandrahmenlager (212), welches eine zweite, quer zur Arbeitsrichtung des Drehpfluges (1) angeordnete Rotationsachse (2121) bildet, an einem Stützarm (23) angebracht ist.

5. Drehpflug (1) gemäss Anspruch 4, wobei mindestens ein rotationshemmendes Reibungselement (2122) zwischen dem Bandrahmenlager (212) und dem Bandrahmen (21) angeordnet ist.

6. Verwendung eines Bandes, welches auf einem Bandrahmen (21) angeordnet ist, als Tiefensteuerungsanordnung (2) für einen Drehpflug (1) gemäss Anspruch 1.

## Revendications

1. Une charrue réversible (1) comprenant
un agencement de régulation de la profondeur (2) monté sur une partie arrière (121) d'un bâti (12) de la charrue réversible (1), et
un dispositif de régulation de la profondeur (232), dans laquelle
l'agencement de régulation de la profondeur (2) comprend une courroie sans fin (22) formant, en condition de fonctionnement, une face de contact (222) contre le sol (3), dans laquelle
une structure pour courroie (21) est pivotable autour d'une axe de rotation (2312) sensiblement concordant avec la direction de travail de la charrue réversible (1).

2. Le charrue réversible (1) selon la revendication 1, dans laquelle la structure pour courroie (21) comprend au moins trois rouleaux de support (213, 214, 215) disposés pour guider la courroie (22) selon un mouvement linéaire lorsque la courroie (22) est en contact avec le sol (3).

3. La charrue réversible (1) selon la revendication 1, dans laquelle la structure de courroie (21) est reliée au bâti (11) de la charrue réversible (1) au moyen d'un bras de support (23) pivotable autour d'un premier axe de rotation (2311) disposé transversalement par rapport à la direction de travail de la charrue réversible (1).

4. La charrue réversible (1) selon la revendication 1, dans laquelle la structure de courroie (21) est montée sur un bras de support (23) au moyen d'un palier de structure de courroie (212) formant un deuxième axe de rotation (2121) disposé transversalement par rapport à la direction de travail de la charrue réversible (1).

5. La charrue réversible (1) selon la revendication 4, dans laquelle au moins un élément de friction de limitation de rotation (2122) est disposé entre le palier de structure de courroie (212) et la structure de courroie (21).

6. Utilisation d'une courroie disposée sur une structure de courroie (21) en tant qu'agencement de régulation de profondeur (2) pour une charrue réversible (1) selon la revendication 1.
